# EUROPÄISCHE PATENTSCHRIFT

(11) **EP 1 501 697 B1**
(45) Veröffentlichungstag und Bekanntmachung des Hinweises auf die Patenterteilung: **07.03.2007**
(21) Anmeldenummer: 03722361.7
(22) Anmeldetag: 27.03.2003
(51) Int. Cl.: B60N 2/02, B64D 11/06

(54) **SITZ**
SEAT
SIEGE

(30) Priorität: 06.05.2002 DE 10220248
(43) Veröffentlichungstag der Anmeldung: 02.02.2005
(73) Patentinhaber: Recaro Aircraft Seating GmbH & Co. KG, 74523 Schwäbisch Hall (DE)
(72) Erfinder: BAUER, Jürgen, 71560 Sulzbach/Murr (DE); LISCHKA, Heribert, 88677 Markdorf (DE)
(74) Vertreter: Bartels, Martin Erich Arthur
(86) Internationale Anmeldenummer: PCT/EP2003/003189
(87) Internationale Veröffentlichungsnummer: WO 2003/093051

(56) Entgegenhaltungen:
- WO-A-96/41557
- DE-A- 3 933 562
- DE-A- 10 003 614
- DE-A- 10 039 686
- DE-A- 19 944 620
- DE-C- 19 937 378
- FR-A- 2 736 879

## Beschreibung

Die Erfindung betrifft einen Sitz, insbesondere Fahrzeugsitz, vorzugsweise Fluggastsitz, gemäß der Merkmalsausgestaltung des Oberbegriffes des Patentanspruches 1.

In der DE-A-199 44 620 ist ein Fluggastsitz beschrieben, der aus einzelnen Sitzkomponenten einschließlich einer Beinauflage und einer Rückenlehne besteht. Die genannten Sitzkomponenten sind mittels Betätigungseinrichtungen in Form sog. Stellantriebe oder Aktuatoren bewegbar, die von einer von Hand bedienbaren Betätigungseinrichtung zum Einstellen des Sitzes an die Belange des jeweiligen Sitzbenutzers ansteuerbar sind. Dabei sind für die Sitzteile den Konturen dieser Sitzteile nachempfundene Griffhebel als Teil der Betätigungseinrichtung vorhanden, die für eine Einstellung des Fluggastsitzes in einem Bedienteil zusammengefaßt eine sinnfällige Einstellung für die jeweiligen Sitzkomponenten ergeben. Kommt bei der bekannten Lösung der Sitzbenutzer an das Bedienfeld, ist eine ungewollte Einstellbewegung des Sitzes möglich, was zum einen zum Erschrecken führen kann und zum anderen auch ein gewisses Gefährdungspotential für den Sitzbenutzer in sich birgt. Durch die US 5,352,020 ist eine vergleichbare Sitzlösung bekannt mit Sitzkomponenten, wie einem Sitzteil einer Rückenlehne und einer Beinauflage, die über mindestens eine Betätigungseinrichtung in ihrer Lage, insbesondere in ihrer Neigung zueinander einstellbar sind, wobei der bekannte Fluggastsitz hierfür mit einer Steuereinrichtung mit mindestens einem, vorzugsweise von Hand betätigbaren Steuerteil versehen ist. Dabei ist für jede Einstellmöglichkeit einer Sitzkomponente ein eigenständiger Betätigungsknopf vorgesehen und bei unbeabsichtigter Betätigung wird ein Sitzeinstellvorgang mit dem genannten Gefährdungspotential für den Sitzbenutzer ausgelöst.

Durch die EP-B-0 774 913 ist ein Fahrzeug- oder Fluggastsitz bekannt mit einer elektrischen Steuerung, die in ihrer Funktion auf eine Beinauflage einwirkt, um die Position der Beinruhestellung zu überwachen, damit ein Aufstoßen der Fußstütze als integraler Bestandteil der Beinauflage auf den Boden verhindert ist. Zur Realisierung des dahingehenden Aufstoßschutzes überwacht die elektronische Steuerung über entsprechende Sensoren sowohl die Ist-Stellung der Fußstütze als auch die Ist-Stellung der Beinauflage. Sofern zum Ansteuern dieser bekannte Sitz mit einem Bedienteil versehen ist, das beispielsweise über eine Kabelverbindung od. dgl. mit der Betätigungseinrichtung für die Aktuatoren in Verbindung steht, kann es insbesondere beim Weglegen des Bedienteiles gleichfalls zu einem ungewollten Betätigungsvorgang kommen mit den bereits beschriebenen Nachteilen. Des weiteren ist die bekannte Lösung mit einem einzelnen Betätigungsknopf (magic button) versehen, der es erlaubt, durch eine einmalige Betätigung dieses Bedienknopfes den Sitz aus einer beliebigen Lage in eine sog. aufrechte Stellung zu bringen, bei der zumindest die Rückenlehne im wesentlichen eine vertikale Neigung einnimmt, wobei diese aufrechte Stellung (upright position) bei Start und Landung einzunehmen ist und im Falle einer Notsituation, beispielsweise wenn ein Crash des Flugzeuges zu befürchten ist. Auch der dahingehende singuläre Bedienknopf löst bei einem unbeabsichtigten Betätigen den beschriebenen Sitzeinstellvorgang aus.

Durch die DE-C-199 37 378 ist ein Sitz bekannt mit über mindestens eine Betätigungseinrichtung in ihrer Lage einstellbaren Sitzkomponenten sowie mit einer Steuervorrichtung, wobei die Steuervorrichtung mit einem Auslöseknopf als Funktionsteil versehen ist, der sicherstellt, dass die Steuervorrichtung nicht unbeabsichtigt auslösen kann. Bei der bekannten Lösung werden in Abhängigkeit von denen der Steuervorrichtung zugeführten Steuerbefehle Einstellbewegungen der Sitzkomponenten, wie Sitzteil, Rükkenlehne und Beinauflage, eingeleitet. Hierbei sind die Steuerbefehle durch Verändern des Sitzgewichtes des Sitzbenutzers an dem zum Einstellen gewünschten Sitzteil in die der gewünschten Einstellrichtung entsprechenden Richtung auslösbar. Die Steuereinrichtung gibt die Steuerbefehle nur während einer manuellen Betätigung des einen Auslöseknopfes zum Umsetzung frei. Trotz der insoweit hergestellten Sicherheit ist ein unbeabsichtigtes Auslösen einer Sitzeinstellbewegung dennoch nicht vollständig auszuschließen.

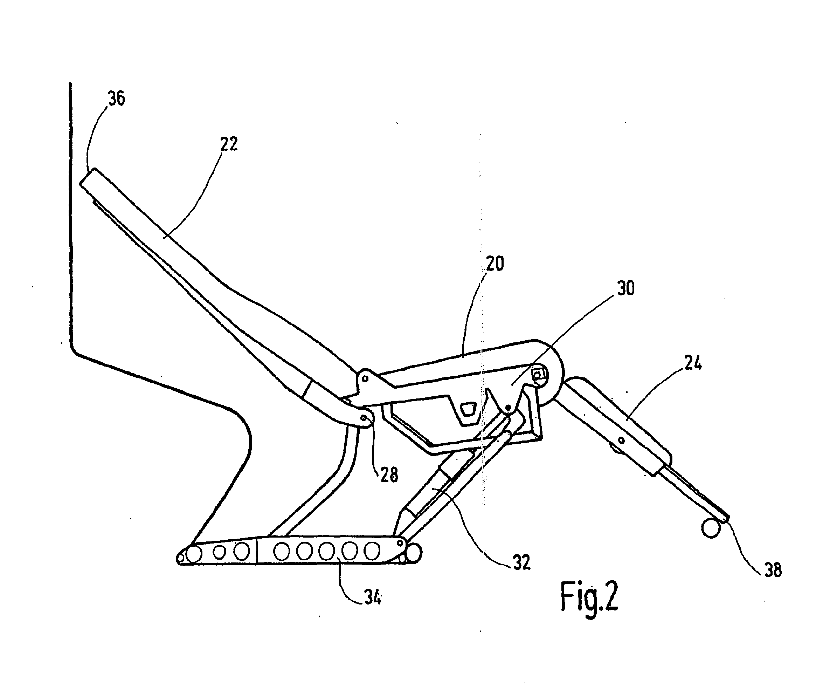

Die FR-A-2 696 384 betrifft einen gattungsgemäßen Sitz, insbesondere in Form eines Kraftfahrzeugsitzes, mit einem Sitzteil mit ein- und ausfahrbarer Beinauflage sowie einer Rückenlehne, die über mindestens eine Betätigungseinrichtung in ihrer Lage, insbesondere in ihrer Neigung zueinander, einstellbar sind und mit einer Steuereinrichtung mit einem vorzugsweise von Hand betätigbaren Steuerteil, wobei die Steuereinrichtung mit einem ersten Funktionsteil versehen ist, das sicherstellt, dass die Steuereinrichtung und/oder das Steuerteil nicht unbeabsichtigt auslösbar ist, wobei die Steuereinrichtung mit einem zweiten Funktionsteil versehen ist und wobei ein Sitzeinstellvorgang erst nach Betätigen des ersten sowie des zweiten Funktionsteils ermöglicht ist. Bei der bekannten Lösung, wie beispielsweise in Fig.2 vorgestellt, ist die Steuereinrichtung für alle relevanten Sitzeinstellfunktionen sowie für Zusatzfunktionen in einem gemeinsamen Bedientableau zusammengefaßt, wobei zunächst zur Aktivierung der Steuereinrichtung als solche ein Hauptschalter als erstes Funktionsteil einmal zu bedienen ist, um dergestalt die weiteren Funktionsteile der Steuereinrichtung in ihrer Funktion wirksam werden zu lassen. Anschließend wird ein zweites Funktionsteil als Bedienknopf wiederum einmal kurz von Hand betätigt, was dann mehrere Schaltknöpfe freischaltet die als drittes Funktionsteil unter anderem die Einstellung der Sitzkomponenten zueinander unter Einbezug ihrer Neigung ermöglichen, wobei das dritte Funktionsteil so lange betätigt bleibt, bis der Einstellvorgang abgeschlossen ist. Eine Außerbetriebnahme der Steuereinrichtung erfolgt dann durch Ausschalten des Hauptschalters. Sind die beiden erstgenannten Funktionsteile geschaltet, genügt bereits ein kurzes ungewolltes Antippen eines dritten Funktionsteils in Form eines Bedienknopfes, um einen Sitzeinstellvorgang auszulösen, was zu den bereits beschriebenen Sicherheitsrisiken führt. Eine dahingehende Fehlbedienung ist insbesondere auch schon deshalb wahrscheinlich, weil neben den genannten Funktionsteilen weitere Funktionsteile innerhalb der Steuer einrichtung angeordnet sind, wie beispielsweise eine Bedientaste zum Ansteuern einer Telefoneinrichtung, was nur möglich ist, wenn der Hauptschalter wie für die anderen Funktionsteile an ist.

Ausgehend von diesem Stand der Technik liegt der Erfindung die Aufgabe zugrunde, die bekannten Fahrzeugsitze, insbesondere Fluggastsitze, dahingehend weiter zu verbessern, daß die vorstehend beschriebenen Nachteile nicht auftreten, insbesondere daß es nicht zu ungewollten Sitzeinstellbewegungen kommen kann, wenn zufälligerweise das Steuerteil in Form des Bedienteiles, einer Bedientaste oder eines Bedienschalters, betätigt wird. Eine dahingehende Aufgabe löst ein Sitz mit den Merkmalen des Patentanspruches 1 in seiner Gesamtheit.

Dadurch, daß gemäß dem kennzeichnenden Teil des Patentanspruches 1 für einen Sitzeinstellvorgang das erste Funktionsteil durch den Sitzbenutzer permanent zu betätigen ist und daß mit Freigabe des ersten Funktionsteils dieses seine nicht betätigte Stellung einnimmt, ist insoweit erhöhten Sicherheitsanforderungen gegenüber dem Stand der Technik Rechnung getragen. In Abkehr von den beschriebenen bekannten Lösungen sieht die erfindungsgemäße Lösung vor, daß erst mit permanentem Betätigen des ersten Funktionsteils durch den jeweiligen Sitzbenutzer die eigentliche Funktion der Sitzeinstellung mit dem zweiten Funktionsteil möglich ist, wobei ein Freigeben des ersten Funktionsteils sofort zur Blockierung der Bewegung bei der Sitzeinstellung über das weitere Funktionsteil führt. Bei der erfindungsgemäßen Lösung ist es also nicht nur notwendig, was im Stand der Technik aufgezeigt ist, einen Sitzeinstellvorgang erst nach Betätigen des ersten sowie des zweiten Funktionsteils zu ermöglichen, sondern vielmehr ist eine permanente Betätigung des ersten Funktionsteils durch den Sitzbenutzer beispielsweise von Hand notwendig, um die Ansteuerung der Sitzeinstellung mittels des zweiten Funktionsteils wirksam werden zu lassen. Wird das erste Funktionsteil dann losgelassen, kommt es zu einem Rückstellvorgang in die nicht betätigte Stellung des ersten Funktionsteils und die Sitzansteuerung mittels des zweiten Funktionsteils ist unterbunden. Somit ist erst nach Betätigen der dahingehenden Sicherheitseinrichtung (Safety-Button) eine gezielte Einstellung des Sitzes entlang vorgebbarer Einstellmuster (Kinematik) möglich. Hiermit ist ein hohes Maß an Sicherheit erreicht und es kann keinesfalls zu ungewollten Betätigungsvorgängen kommen, wie im Stand der Technik aufgezeigt.

Vorzugsweise ist dabei das erste Funktionsteil als Sicherheitsschalter (Safety Button) ausgestaltet, der mit der zugehörigen elektrischen oder elektronischen Sicherheitsschaltung unter Einbezug des zweiten Funktionsteils sicherstellt, dass es nicht zu einem unbeabsichtigten Verfahren der Sitz-Kinematik kommen kann. Erst durch Betätigen von beiden Funktionsteilen werden alle Funktionen der sonstigen Schalt- und Steuerteile für einen Betätigungsvorgang durch den Sitzbenutzer freigeschaltet. Ist nur eine der beiden Funktionsteile nicht betätigt, sind die anderen Bedienelemente in ihrer Funktion verriegelt und nicht schaltbar.

Das erste Funktionsteil, vorzugsweise als permanent zu bedienender Sicherheitsschalter ausgebildet, kann sich an einem Bedienteil selbst mit den anderen Steuerteilen in Form von Schaltknöpfen od. dgl. befinden oder er befindet sich an einer anderen Stelle, von wo aus er gut durch den Fluggast oder Sitzbenutzer zu erreichen ist.

Anstelle das erste Funktionsteil als Schalter oder Schaltknopf, beispielsweise an einer Armlehne des Fluggastsitzes angeordnet, auszubilden, besteht auch die Möglichkeit, das erste Funktionsteil in der Art einer Sitzbelegungserkennung auszugestalten, was es dem Fluggast erlauben würde, bei eingenommener Sitzposition die Steuereinrichtung und/oder das Steuerteil (Bedienteil) entsprechend für Einstellvorgänge des Sitzes unter Einsatz des zweiten Funktionsteils zu betätigen.

Im folgenden wird der erfindungsgemäße Sitz anhand eines Ausführungsbeispiels für einen Fluggastsitz näher erläutert. Dabei zeigen in prinzipieller und nicht maßstäblicher Darstellung die
- Fig.1: in perspektivischer Ansicht zwei in Reihe nebeneinander angeordnete Fluggastsitze, wobei der in Blickrichtung auf die Fig.1 gesehen hintere Fluggastsitz mit einem Sitzbenutzer belegt ist;
- Fig.2: in Seitenansicht einen Fluggastsitz nach der Fig.1 von seinem technischen Grundlagenaufbau her;
- Fig.3: ein von Hand betätigbares Bedienteil zur Ansteuerung der Sitz-Kinematik für einen Fluggastsitz gemäß den Darstellungen nach den Fig.1 und 2.

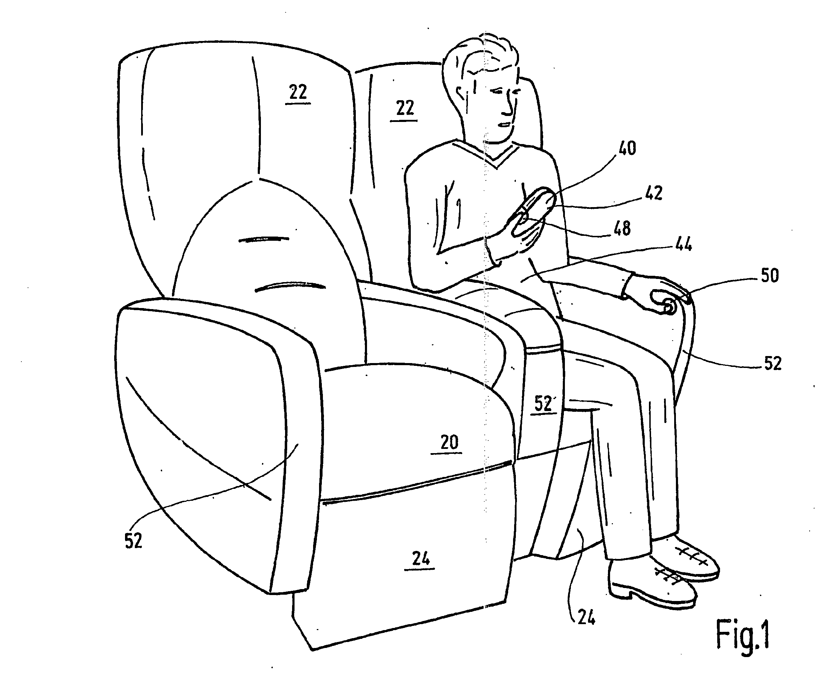

Die Darstellung nach der Fig.1 zeigt einen Fluggastsitz in aufrechter Stellung (upright position). Solche Fluggastsitze mit dem entsprechenden Ausstattungsniveau finden sich häufig im 1.Klasse-Bereich von langstreckenflugzeugen; könnten dem Grunde nach aber auch im Bereich von gehoben ausgestatteten Reisebussen oder bei Passagierschiffen einschließlich Fähren Verwendung finden. Der gezeigte Fluggastsitz nach der Fig.1 ist vorzugsweise Bestandteil eines Einzelabteils (compartment), wobei gemäß der Darstellung nach der Fig.2 der jeweilige Sitz gegenüber in der Reihe nachfolgenden Sitzgruppen räumlich abgegrenzt ist. Der Fluggastsitz kann dem Grunde nach aber auch in Reihe mehrfach nebeneinander angeordnet im Business-Class-Bereich für eine übliche Mehrsitzanordnung Verwendung finden.

Der Fluggastsitz ist aus einzelnen Sitzkomponenten zusammengesetzt, wie einem Sitzteil 10, einer Rückenlehne 22 und einer Beinauflage 24. Der besseren Darstellung wegen ist darüber hinaus die Polsterauflage in der Fig.2 für die genannten Sitzkomporienten nur teilweise wiedergegeben, so daß die darunterliegenden Fluggast-Sitzteile zumindest teilweise sichtbar sind.

Die Rückenlehne 22 ist über eine nicht weiter dargestellte erste Betätigungseiririchtung in ihrer Neigung gegenüber dem in der Grundstellung (vgl. Fig.1) im wesentlichen horizontal verlaufenden Sitzteil 20 schwenkbar um eine Gelenkstelle 28 angeordnet. Das Sitzteil 20 selbst ist gleichfalls schwenkbar, und zwar über einen Viergelenkrahmen 30 mit der in Form eines Aktuators ausgebildeten Betätigungseinrichtung 32. Die Beinauflage 24 ist in der Länge ausfahrbar und über eine nicht dargestellte dritte Betätigungseinrichtung gleichfalls in ihrer Neigung verschwenkbar. Der in der Fig.2 dargestellte Sitz ist darüber hinaus über den Viergelenkrahmen 30 mit einem Aufständerteil 34 verbunden, über den sich der Fluggastsitz auf dem Flugzeugboden festlegen läßt.

Die Ansteuerung von verschiedenen Sitzkomponenten mittels verschiedener Betätigungseinrichtungen 32 ist üblich, so daß an dieser Stelle hierauf nicht mehr näher eingegangen wird. Des weiteren wird bei dem gesamten Sitz auf Leichtbauweise geachtet, um entsprechend die Nutzlast erhöhen zu können. Des weiteren kann der Fluggastsitz mit einer Überwachungseinrichtung ausgestattet sein, beispielsweise in Form einer Rechnereinheit einschließlich eines Klein-Prozessrechners od. dgl.. Die nicht näher dargestellte Überwachungseinrichtung dient dabei der Überwachung der jeweils kollisionsbegründenden Randgeometrien der bewegbaren Sitzkomponenten 20,22,24 mit vorgegebenen räumlichen Begrenzungen, wobei die Überwachungseinrichtung durch Ansteuern der jeweiligen Betätigungseinrichtung 32 zu jedem Zeitpunkt eine kollisionsfreie Bewegung aller Sitzkomponenten innerhalb der genannten räumlichen Begrenzungen sicherstellt. Als kollisionsbegründende Randgeometrien ist im vorliegenden Fall die Lehnenoberkante 36 der Rückenlehne 22 sowie die Unterseite 38 der Beinauflage 24 gegebenenfalls unter Einbeziehen der Beinauflagenverlängerung (vgl. Fig.2) zu sehen. Da jede Sitzkomponente 20,22,24 über eine eigenständige Betätigungseinrichtung 32 verfügt, ist vorgesehen, daß die Überwachungseinrichtung die Stellungen jeder einzelnen Betätigungseinrichtung erfaßt, um derart eine mathematische Rückkopplung über die Position der Sitzkomponenten zu erhalten. Mithin ist es möglich, unter Verzicht auf etwaige Bewegungssensoren, Grenznockenschaltern od. dgl. über die Stellwege der jeweiligen Betätigungseinrichtung 32 auch über die Neigungseinstellwinkel gegenüber einer Bezugsebene für die Sitzkomponenten Informationen zu erhalten. Des weiteren ermöglicht die Überwachungseinrichtung eine Plausibilitätsprüfung der möglichen Stellungen der Sitzkomponenten 20,22,24, um Fehlbedienungen und -stellungen derart auszuschließen.

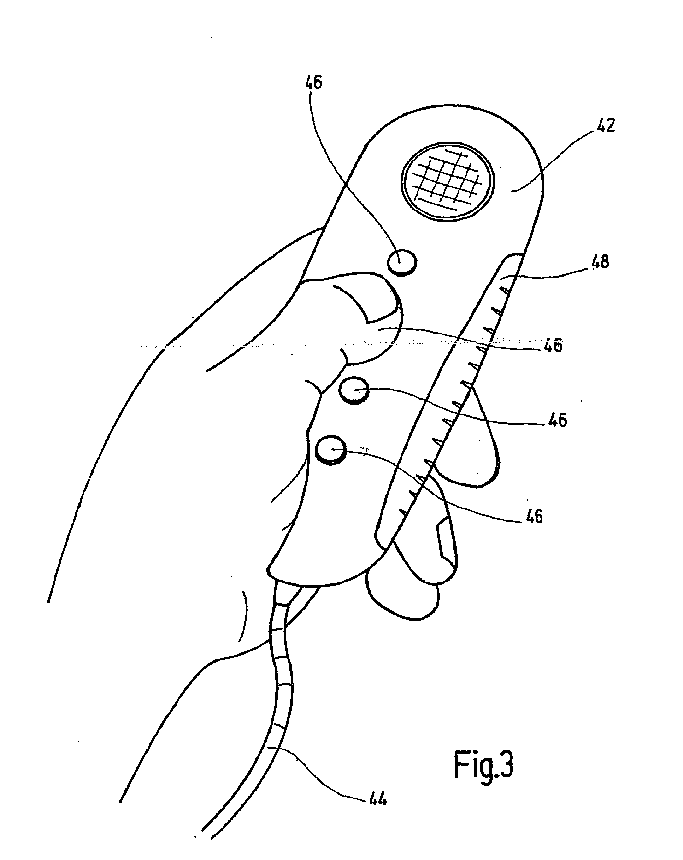

Gemäß der in den Figuren dargestellten Ausführungsform eines Fluggastsitzes ist eine von Hand betätigbare Steuereinrichtung 40 vorgesehen, die als Steuerteil ein Bedienteil 42 aufweist, das über eine Kabelverbindung 44 in Verbindung steht mit der jeweiligen Überwachungs- und Betätigungseinrichtung für die Sitzeinstellkinematik. Gemäß der Ausführungsform eines Bedienteils 42 nach der Fig.3 weist diese mehrere Betätigungsknöpfe 46 auf, wobei jeder Betätigungsknopf 46 einer bestimmten Sitzeinstellsituation zugeordnet ist. So könnte beispielsweise der in Fig.3 gesehen zuoberst dargestellte Betätigungsknopf 46 der Position des Sitzes in seiner aufrechten Stellung (upright position) zugeordnet sein, der zuunterste Knopf könnte einer Liegestellung entsprechen, bei der im wesentlichen alle Sitzkomponenten 20,22 und 24 in einer nahezu horizontalen Anordnung sind, um dem Sitzbenutzer eine Schlafmöglichkeit zu geben. Die dazwischen liegenden beiden Bedienknöpfe 46 können dann Zwischenpositionen für die Sitzeinstellung zugeordnet sein, wobei eine dahingehende Sitz-Zwischenposition in der Fig. 2 wiedergegeben ist.

Um nun sicherzustellen, daß es hier nicht ungewollt zu einer Schaltbetätigung über das Bedienteil 42 kommen kann, ist seitlich an dem Bedienteil 42 ein erstes Funktionsteil 48 angeordnet und erst nach permanentem Betätigen dieses Funktionsteils 48 in Form einer Handtaste läßt sich ein Bedienvorgang über die Bedienschalter 46 auslösen. Wird das erste Funktionsteil 48 von Hand nicht permanent betätigt, beispielsweise entgegen der Federkraft einer Rückstellfeder im Gehäuse des Bedienteils 42, sind die sonstigen Schalter oder Betätigungsknöpfe 46 verriegelt und eine Sitzeinstellbewegung ist nicht auslösbar. Mithin ist es für einen Sitzbenutzer nicht möglich, ungewollt eine Sitzeinstellbewegung auszulösen, auch wenn er beispielsweise das Bedienteil 42 ungünstig beiseite legt oder etwa darauf zu sitzen kommt od. dgl. mehr.

Darüber hinaus ist es gemäß der Darstellung nach der Fig. 1 vorgesehen, alternativ zu dem beschriebenen ersten Funktionsteil 48 ein Funktionsteil, hier in der Armlehne, vorzusehen, mit dem es erst möglich ist, einen Sitzeinstellvorgang für den Gesamtsitz überhaupt zu aktivieren. Das heißt, mit permanentem Betätigen des ersten Funktionsteils in Form des Betätigungsknopfes in der Armlehne 52 wird das Bedienteil 42 "scharf geschaltet" und ein sinnfälliger Bedien- und Sitzeinstellvorgang kann ausgelöst werden mittels des Bedienteils 42, jedoch erst nach permanentem Betätigen des ersten Funktionsteils 48 in Form der beschriebenen Handtaste. Bei einer weiteren Version der beschriebenen Bedieneinrichtung ist es auch möglich, das erste Funktionsteil 48 durch einen Bedienknopf an der Armlehne zu ersetzen. Drückt die Bedienperson dann den Betätigungsknopf an der Armlehne und hält diesen permanent gedrückt, ist ein Einstellvorgang über das Bedienteil 42 mit seinem jeweiligen Betätigungsknopf 46 möglich. Anstelle einer weiteren Funktionstaste 50 am Sitz kann auch eine nicht näher dargestellte Sitzerkenneinrichtung treten, die feststellt, wenn ein Sitzbenutzer im Sitz permanent Platz genommen hat, um dergestalt das Bedienteil 42 "scharf zu schalten", mit der Möglichkeit des Bedienens des weiteren Funktionsteils die Sitzeinstellung durchzuführen. Anstelle der Sitzbelegungserkennung könnten auch noch andere Erkennungssysteme treten, beispielsweise in Form eines Bewegungssensors, der erkennt, sobald ein Sitzbenutzer den jeweiligen Sitz belegt.

Mit der beschriebenen Sicherheitseinrichtung ist jedenfalls bei einem Sitz sichergestellt, daß dieser nicht ungewollt eine Einstellbewegung durchführt oder eine bestimmte Einstellsituation einnimmt. Erst nach permanenter Betätigung der Sicherheitseinrichtung (Safety Button) ist eine gezielte Einstellung des Sitzes entlang vorgebbarer Einstellmuster (Kinematik) möglich.

## Patentansprüche

1. Sitz, insbesondere Fahrzeugsitz, vorzugsweise Fluggastsitz, mit Sitzkomponenten, wie einem Sitzteil (20), einer Rückenlehne (22) und einer Beinauflage (24), die über mindestens eine Betätigungseinrichtung (32) in ihrer Lage, insbesondere in ihrer Neigung zueinander, einstellbar sind, und mit einer Steuereinrichtung (40) mit mindestens einem, vorzugsweise von Hand eines Sitzbenutzers betätigbaren Steuerteil, wobei die Steuereinrichtung (40) mit einem ersten Funktionsteil (48) versehen ist, das sicherstellt, daß die Steuereinrichtung und/oder das Steuerteil nicht unbeabsichtigt auslösbar ist, wobei die Steuereinrichtung (40) mit einem zweiten Funktionsteil versehen ist und wobei ein Sitzeinstellvorgang erst nach Betätigen des ersten Funktionsteils (48) und des zweiten Funktionsteils ermöglicht ist, **dadurch gekennzeichnet, daß** für einen Sitzeinstellvorgang das erste Funktionsteil (48) durch den Sitzbenutzer permanent zu betätigen ist und daß mit Freigabe des ersten Funktionsteils (48) dieses seine nicht betätigte Stellung einnimmt.

2. Sitz nach Anspruch 1, **dadurch gekennzeichnet, daß** eine Überwachungseinrichtung vorgesehen ist zur Überwachung der jeweils kollisionsbegründenden Randgeometrien (36,38) der bewegbaren Sitzkomponenten (20,22,24) mit vorgegebenen räumlichen Begrenzungen und daß die Überwachungseinrichtung durch Ansteuern der jeweiligen Betätigungseinrichtung (32) zu jedem Zeitpunkt eine kollisionsfreie Bewegung aller Sitzkomponenten innerhalb der räumlichen Begrenzung sicherstellt.

3. Sitz nach Anspruch 2, **dadurch gekennzeichnet, daß** jede Sitzkomponente über eine eigenständige Betätigungseinrichtung (32) verfügt und daß die Überwachungseinrichtung die Stellung jeder einzelnen Betätigungseinrichtung (32) erfaßt.

4. Sitz nach einem der Ansprüche 1 bis 3, **dadurch gekennzeichnet, daß** über die Stellwege der jeweiligen Betätigungseinrichtung (32), vorzugsweise in Form eines Aktuators, auch die Neigungseinstellwinkel gegenüber einer Bezugsebene erfaßt sind.

5. Sitz nach einem der Ansprüche 1 bis 4, **dadurch gekennzeichnet, daß** die Rückenlehne (22) mit einer ein- und ausfahrbaren Kopfstütze versehen ist und die Beinauflage (24) mit einer ein- und ausfahrbaren Verlängerung.

6. Sitz nach einem der Ansprüche 1 bis 5, **dadurch gekennzeichnet, daß** als kollisionsbegründende Randgeometrien der Sitzkomponenten die Lehnen-Oberkante (36) und die Beinauflage-Unterkante (38) mit verwendet sind und/oder daß die Körperkonturen eines Sitzbenutzers zumindest teilweise in die Festlegung der Randgeometrien mit einbezogen sind.

7. Sitz nach einem der Ansprüche 1 bis 6, **dadurch gekennzeichnet, daß** das erste Funktionsteil (48) aus einer Handhabe oder aus einem Bedienknopf (Safety-Button), insbesondere Bedienschalter, gebildet ist, der entweder an einem zentralen Bedienteil angeordnet oder an einer Armlehne (52) des Sitzes angeordnet ist und/oder aus einer Erkennungseinrichtung besteht, die feststellt, ob der Sitz durch einen Sitzbenutzer belegt ist.

8. Sitz nach Anspruch 7, **dadurch gekennzeichnet, daß** das Bedienteil (42) mehrere Schaltknöpfe (46) aufweist und jeder Schaltknopf (46) in einer vorgebbaren Reihenfolge einer fest vorgebbaren Sitzeinstellung von Sitzteil (20), Rückenlehne (22) und Beinauflage (24) zugeordnet ist.

## Claims

1. Seat, in particular a vehicle seat, preferably an airplane passenger seat, with seat components such as a seat part (20), a back rest (22), and a leg rest (24), the position of the same being adjustable via at least one activating means (32), in particular the incline in relation to each other, and with a control means (40) with at least one control part preferably manually activated by a seat user, whereby the control means (40) is equipped with a first functional part (48) which ensures that the control means and/or the control part cannot be initiated unintentionally, whereby the control means (40) is equipped with a second functional part, and whereby a seat adjustment process is possible only after activating the first functional part (48) and the second functional part, **characterised in that** the first functional part (48) must be permanently activated by the seat user for a seat adjustment process, and **in that** the same takes up its non-activated position upon release of the first functional part (48).

2. Seat according to Claim 1, **characterised in that** a monitoring means is envisaged for monitoring the relevant collision endangered edge geometries (36, 38) of the moveable seat components (20, 22, 24) with pre-determined spatial limits, and **in that** the monitoring means ensures a collision free movement of all seat components within the spatial limits at all times by controlling the relevant activating means (32).

3. Seat according to Claim 2, **characterised in that** each seat component comprises an independent activating means (32), and **in that** the monitoring means records the position of each individual activating means (32).

4. Seat according to one of the Claims 1 to 3, **characterised in that** the incline adjustment angle in relation to the reference level is also recorded by means of the adjustment paths of the relevant activating means (32), preferably in the form of an actuator.

5. Seat according to one of the Claims 1 to 4, **characterised in that** the back rest (22) is equipped with an extendible and retractable head rest, and the leg rest (24) with an extendible and retractable extension.

6. Seat according to one of the Claims 1 to 5, **characterised in that** the back rest upper edge (36) and the leg rest lower edge (38) are used as collision endangered edge geometries of the seat components and/or **in that** the body contours of a seat user are included for the detection of the edge geometries at least in part.

7. Seat according to one of the Claims 1 to 6, **characterised in that** the first functional part (48) is formed from a handle or from an operating button (safety button), in particular an operating switch, which is located either on a central operating part or on an arm rest (52) of the seat, and/or from a recognition means which determines whether the seat is occupied by a seat user.

8. Seat according to Claim 7, **characterised in that** the operating part (42) comprises several switch buttons (46), and **in that** each switch button (46) is associated with a pre-determined sequence of a pre-determined seat adjustment of the seat part (20), back rest (22), and the leg rest (24).

## Revendications

1. Siège, en particulier siège de véhicule, de préférence siège de passager d'avion, ayant des composants de siège, tels qu'une partie d'assise (20), un dossier (22) et un repose-jambes (24) qui, par le biais d'au moins un équipement d'actionnement (32), sont réglables dans leur position, en particulier dans leur inclinaison les uns par rapport aux autres, et ayant un équipement de commande (40) ayant au moins une partie de commande pouvant de préférence être actionnée manuellement par un utilisateur du siège, l'équipement de commande (40) étant muni d'une première partie fonctionnelle (48) qui assure que l'équipement de commande et/ou la partie de commande ne peut pas être déclenché(e) inopinément, l'équipement de commande (40) étant muni d'une deuxième partie fonctionnelle, et un processus de réglage du siège n'étant rendu possible qu'après l'actionnement de la première partie fonctionnelle (48) et de la deuxième partie fonctionnelle, **caractérisé en ce que**, pour un processus de réglage du siège, la première partie fonctionnelle (48) doit être actionnée en permanence par l'utilisateur du siège, et **en ce que**, avec la validation de la première partie fonctionnelle (48), celle-ci occupe sa position non actionnée.

2. Siège selon la revendication 1, **caractérisé en ce qu'**il est prévu un équipement de surveillance pour la surveillance des géométries de bord (36, 38), pouvant occasionner une collision, des composants de siège mobiles (20, 22, 24) avec des limitations spatiales prédéfinies, et **en ce que** l'équipement de surveillance assure à tout moment, par le pilotage de l'équipement d'actionnement (32) respectif, un déplacement exempt de collision de tous les composants de siège à l'intérieur de la limitation spatiale.

3. Siège selon la revendication 2, **caractérisé en ce que** chaque composant de siège dispose d'un équipement d'actionnement (32) autonome, et **en ce que** l'équipement de surveillance détecte la position de chaque équipement d'actionnement (32) individuel.

4. Siège selon une des revendications 1 à 3, **caractérisé en ce que**, par le biais des courses de réglage de l'équipement d'actionnement (32) respectif, de préférence sous la forme d'un actionneur, les angles de réglage d'inclinaison par rapport à un plan de référence sont également détectés.

5. Siège selon une des revendications 1 à 4, **caractérisé en ce que** le dossier (22) est muni d'un appui-tête, pouvant être rentré et sorti, et **en ce que** le repose-jambes (24) est muni d'une rallonge pouvant être rentré et sorti.

6. Siège selon une des revendications 1 à 5, **caractérisé en ce que**, en tant que géométries de bord (36, 38), pouvant donner lieu à une collision, des composants de siège, le bord supérieur de dossier (36) et le bord inférieur de repose-jambes (38) sont utilisés conjointement et/ou **en ce que** les contours corporels d'un utilisateur du siège sont inclus également au moins partiellement dans la définition des géométries de bord.

7. Siège selon une des revendications 1 à 6, **caractérisé en ce que** la première partie fonctionnelle (48) est formée d'une manette ou d'un bouton de commande (safety-button), en particulier d'un commutateur de commande, qui est disposé(e) soit sur une partie de commande centrale, soit sur un accotoir (52) du siège et/ou se compose d'un équipement de détection qui constate si le siège est occupé par un utilisateur du siège.

8. Siège selon la revendication 7, **caractérisé en ce que** la partie de commande (42) présente plusieurs boutons de commande (46), et **en ce que** chaque bouton de commande (46) est affecté, dans un ordre paramétrable, à un réglage de siège, paramétrable de façon fixe, de la partie d'assise (20), du dossier (22) et du repose-jambes (24).
